# EUROPEAN PATENT SPECIFICATION

(11) **EP 2 698 609 B1**
(45) Date of publication and mention of the grant of the patent: **03.03.2021**
(21) Application number: 12306000.6
(22) Date of filing: 13.08.2012
(51) Int. Cl.: G01D 3/10, H02N 2/18, G01H 1/00, G01H 3/00

(54) **Wireless sensing device and method**
Drahtlose Messvorrichtung und Verfahren
Dispositif et procédé de détection sans fil

(43) Date of publication of application: 19.02.2014
(73) Proprietor: Alcatel Lucent, 91620 Nozay (FR)
(72) Inventor: Hernon, Domhnaill, Bettystown, Co. Meath (IE); Grangeat, Christophe, 78220 Viroflay (FR); Ade, Anima, Bangalore, KA (IN); Berg, Markus, 75007 Paris (FR); Frizzell, Ronan, Bettystown, Co. Meath (IE)
(74) Representative: Novagraaf Technologies

(56) References cited:
- EP-A2- 2 387 084
- WO-A1-03/034366
- WO-A1-2008/031632
- WO-A1-2011/117718
- FR-A1- 2 812 084
- JP-A- 2010 271 834
- US-A1- 2003 167 919
- US-A1- 2011 074 162
- US-B1- 6 259 372

## Description

### Technical field

The present invention relates to the field of wireless sensor networks. In particular, the present invention relates to a wireless sensing device for a wireless sensor network, to a method for operating such a device and to a wireless sensor network comprising such a device.

### Background art

As known, a wireless sensor network (briefly, WSN) comprises a number of spatially distributed wireless sensing devices, each device being provided with one or more sensors and one or more short-range wireless transceivers (e.g. Bluetooth transceiver(s)) allowing the node to communicate with the other nodes of the WSN.

The sensors provided at the wireless sensing devices of a WSN are suitable to monitor physical or environmental conditions, such as vibrations, temperature, pressure, light, noise, pollutants, energy, etc., depending on the type of application of the WSN. The most common applications of WSNs include traffic monitoring, domestic monitoring, monitoring of industrial processes or industrial plants, structural monitoring of infrastructures or buildings, and so on.

In a WSN, each wireless sensing device provides data relating to the physical or environmental conditions detected by its own sensor(s). Then, each device may transmit its own data to a central station, possibly through other devices (depending on the topology according to which the devices are arranged). A device may spontaneously transmit its data to the central station or, alternatively, data transmission by a device may be triggered by a query generated by the central station. At the central station, information provided by the various wireless sensing devices are gathered and processed in a centralized way.

Each wireless sensing device typically draws the needed electric power either from the mains or from a local electric power source, such as a battery.

The electric power consumption of a wireless sensing device is mainly due to electric power consumed by its sensor(s) and by its wireless transceiver(s).

US 2003/0167919 discloses a conduit network system including multiple nodes in communication with an inner area of a conduit which is used to transfer material therein. Each node comprises a sensor detecting variables reflecting the physical or chemical attributes of the conduit, a transceiver and antenna arrangement for wireless communication and a node control mechanism. Each node further comprises a power device used to power the various electronic sub-components of the node. In addition or alternatively to the power device, each node may comprise an in-line power-generating device located in an inner area of the conduit, which uses the physics of the material transferred through the conduit to generate power. The documents JP2010271834 and EP2387084 disclose wireless sensing devices according to the state of the art.

### Summary of the invention

The inventors have noticed that supplying wireless sensing devices by the mains is disadvantageous, in that the WSN provider would need to ask authorization from the local authority distributing electric power for connecting its devices to the mains. Obtaining such authorization may be however a very costly and time-consuming operation.

On the other hand, use of batteries for supplying wireless sensing devices is disadvantageous in that batteries discharge and accordingly have a limited lifetime. When a battery supplying a device discharges, it needs to be replaced. This operation is however very time-consuming (especially in case the WSN comprises several devices spread over a wide area) and accordingly increases the maintenance cost of the WSN. Moreover, accessing a wireless sensing device for replacing its battery may be inconvenient or even impossible, if the location of the device is remote and/or hardly accessible. Moreover, batteries comprise chemicals which may pollute the environment.

In view of the above, the inventors have faced the problem of providing a wireless sensing device (in particular, a wireless vibration sensing device) which overcomes the aforesaid drawbacks.

In particular, it is desired to provide a wireless sensing device (in particular, a wireless vibration sensing device) which comprises an environment-friendly autonomous source of electric power capable of supplying a potentially unlimited amount of electric power, without the need of recharging or replacement for an extended period of time.

Herein reference to the terms "mechanical vibration" is to be understood to relate to a vibration which is caused by the presence or occurrence of a physical phenomenon external to the wireless sensing device. Therefore, intrinsic vibrations which in a real-life devices may be caused by the very operation of the device itself are considered negligible and not encompassed within the meaning of the terms "mechanical vibration" in the context of the present specification.

According to a first aspect, there is provided a wireless sensing device comprising:
- a vibration sensor configured to detect a mechanical vibration and to generate an electric signal in response to the mechanical vibration; and
- a transceiver suitable for establishing a wireless connection between the wireless sensing device and a remote device,
wherein the transceiver is configured to receive at least a portion of the electric signal and, depending on an intensity of the at least a portion of the electric signal, to switch on and transmit a radio signal to the remote device.

According to preferred embodiments, the vibration sensor comprises a vibration energy harvester.

More preferably, the vibration energy harvester comprises a housing, a first mass element and a second mass element arranged within the housing, and an energy transducer coupled to the second mass element, the energy transducer being arranged to be activated by a relative motion between the housing and the second mass element, the relative motion being excited by at least a portion of a kinetic energy collisionally transferred from the first mass element to the second mass element.

According to a first embodiment, the sensor is configured to automatically supply the at least a portion of the electric signal to the transceiver.

Preferably, the transceiver is further configured to, when switched on, automatically transmit the radio signal to the remote device.

According to a second embodiment, the wireless sensing device further comprises a control module interposed between the vibration sensor and the transceiver, the control module being configured to check whether the electric signal fulfills one or more predetermined requirements, and to supply the at least a portion of the electric signal to the transceiver if the one or more predetermined requirements are fulfilled.

Preferably, the control module is further configured to instruct the transceiver to transmit the radio signal to the remote device.

Optionally, the transceiver is further configured to include in the radio signal information relating to the electric signal.

According to a second aspect, there is provided a method for operating a wireless sensing device comprising a vibration sensor and a transceiver suitable for establishing a wireless connection between the wireless sensing device and a remote device, the method comprising, at the vibration sensor:
a) at the vibration sensor, detecting a mechanical vibration and generating an electric signal in response to the mechanical vibration; and
b) at the transceiver, receiving at least a portion of the electric signal and, depending on an intensity of the at least a portion of the electric signal, switching on and transmitting a radio signal to the remote device.

According to a first embodiment, step b) comprises automatically receiving the at least a portion of the electric signal to the transceiver as the vibration sensor generates the electric signal.

Preferably, step b) further comprises, at the transceiver, automatically transmitting the radio signal to the remote device as the transceiver switches on.

According to a second embodiment, step b) further comprises, before receiving the at least a portion of the electric signal at the transceiver, checking whether the electric signal fulfills one or more predetermined requirements, and receiving the at least a portion of the electric signal at the transceiver if the one or more predetermined requirements are fulfilled.

Preferably, step b) further comprises instructing the transceiver to transmit the radio signal to the remote device.

Preferably, step b) further comprises including in the radio signal information relating to the electric signal.

According to a third aspect, there is provided a wireless sensor network comprising at least one wireless sensing device as set forth above.

### Brief description of the drawings

The present invention will become clearer by reading the following detailed description, given by way of example and not of limitation, to be read by referring to the accompanying drawings, wherein:
- Figure 1 schematically shows a wireless sensing device according to a first embodiment of the present invention;
- Figure 2 is a flow chart of the operation of the device of Figure 1;
- Figure 3 schematically shows a wireless sensing device according to a second embodiment of the present invention;
- Figure 4 is a flow chart of the operation of the device of Figure 3;
- Figure 5 schematically shows a wireless sensor network comprising a number of wireless sensing devices according to the first or second embodiment of the present invention;
- Figures 6a and 6b relate to an exemplary application of the device of Figure 1; and
- Figures 7a and 7b relate to an exemplary application of the device of Figure 3.

### Detailed description of preferred embodiments of the invention

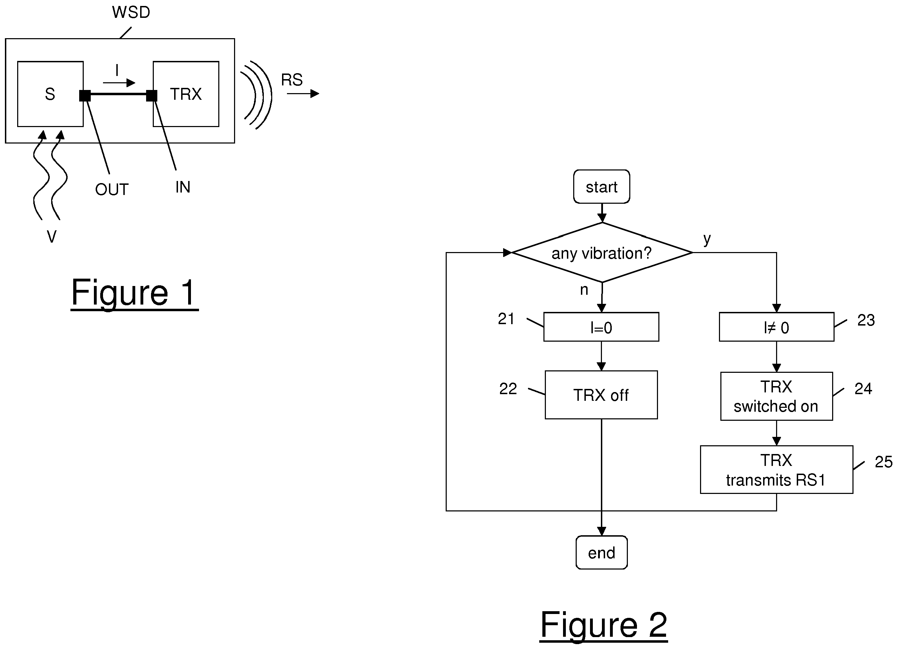

Figure 1 shows a wireless sensing device WSD according to a first embodiment of the present invention.

The wireless sensing device WSD preferably comprises one or more vibration sensors and one or more wireless transceivers. By way of non limiting example, the device WSD shown in Figure 1 comprises one vibration sensor S and one short-range wireless transceiver TRX.

The vibration sensor S comprises a sensor configured to detect vibrations using a one-degree-of-freedom based vibration detector and/or a multi-degree-of-freedom based vibration detector. According to particularly preferred embodiments, the vibration sensor S comprises a vibration energy harvester configured to convert a mechanical vibration V into an electric signal I, namely an electric current or an electric voltage. The vibration sensor S has an output OUT through which it emits the electric signal I.

More preferably, the vibration sensor S comprises a vibration energy harvester as described by US2011/0074162. Such vibration energy harvester comprises a first mass element of higher mass and a second mass element of lower mass moving ballistically along a straight path to which they are constrained by a low-friction guiding rod ("ballistically" meaning that the motion of the mass elements is dominated by their own momentum, gravity, pseudo-gravity, but is not dominated by friction and applied forces). The mass elements and the guiding rod are contained within a housing to which the guiding rod is fixed. Spring elements are provided to prevent inelastic energy loss in collisions between the mass elements and between each mass element and the housing. Energy transduction is provided by a solenoidal coil concentric with the displacement axis of the mass elements. The second mass element is composed of a permanent magnet. When the second mass element is set in motion, an output voltage is produced by electromagnetic induction. In operation, the housing is in contact with the external source of mechanical disturbance. When the housing is in a state of mechanical agitation, kinetic energy is collisionally transferred from the first mass to the second mass, according to the principle of velocity multiplication. Because the coil is fixed relative to the housing, the relative motion between the second mass element and the housing is equivalent to the relative motion between the second mass element and the coil. This relative motion causes an output voltage to be induced. Such vibration energy harvester is particularly advantageous in that it provides a wide operating frequency bandwidth and is accordingly particularly suitable for real-life applications, where mechanical vibrations may exists over a wide range of frequencies.

The short-range wireless transceiver TRX is preferably configured to implement a wireless connection between the wireless sensing device WSD and a remote device, such as for instance a further wireless sensing device or a remote central station configured to take actions based on information received from the device WSD. The transceiver TRX may comprise for instance a Bluetooth transceiver or a Wi-Fi transceiver. The transceiver TRX preferably comprises an input IN connected to the output OUT of the vibration sensor S, through which it is supplied by the electric signal I emitted by the vibration sensor S, as it will be discussed in detail herein after.

The device WSD may comprise other components, which are not shown in Figure 1 since they are not relevant to the present description. Furthermore, according to embodiments not shown in the drawings, the device WSD may comprise a voltage actuator (e.g. a DC-DC converter) interposed between the output OUT of the sensor S and the input IN of the transceiver TRX, which is suitable for processing the electric signal I in order to make it suitable for supplying the transceiver TRX.

The operation of the device WSD will be now described in detail, with reference to the flow chart of Figure 2.

In absence of mechanical vibrations in the environment surrounding the device WSD, the vibration sensor S is not subject to any mechanical vibration, and accordingly it does not generate any electric signal (step 21). The transceiver TRX is therefore not supplied by any electric power and is consequently switched off (step 22).

When a mechanical vibration V arises in the environment surrounding the device WSD, the vibration sensor S converts such a mechanical vibration V into the electric signal I or, in other words, generates the electric signal I in response to the mechanical vibration V (step 23). The vibration sensor S then supplies the electric signal I to the transceiver TRX. If the intensity of the electric signal I is sufficient to power the transceiver TRX, the transceiver TRX switches on (step 24). If the intensity of the electric signal I is not sufficient to power the transceiver TRX, the transceiver TRX remains switched off (this step is not shown in the drawing).

Once switched on, the transceiver TRX preferably automatically transmits a radio signal RS to the above mentioned remote device (step 25). The radio signal RS is indicative of the presence of the mechanical vibration V and is preferably suitable to trigger an appropriate reaction at the remote device. The content of the radio signal RS and the consequent reaction of the remote device depend on the application of the wireless sensor device WSD, as it will be discussed in detail herein after. For instance, the radio signal RS may comprise an alarm message which, upon reception at the remote device, brings the remote device to an alert state, to a waking state or changes its functionality.

Therefore, in the device WSD, the vibration sensor S acts as a local power source for the device itself, and in particular for the transceiver TRX. In absence of mechanical vibrations, the vibration sensor S does not generate any electric power and the device WSD is accordingly switched off. In the presence of mechanical vibrations, the vibration sensor S converts such vibrations into an electric power which may power the transceiver TRX, thereby triggering its switching on and the transmission of the radio signal RS.

Use of the vibration sensor S as a local source of electric power is advantageous in that, differently from batteries, the vibration sensor may provide a potentially unlimited amount of electric power, without any need of recharging or replacement. Maintenance costs due to recharging or replacement of batteries are therefore advantageously avoided. The term "unlimited" as used herein refers to the availability of the power supply at any time of need without the requiring recharging or replacing the source of power as would be the case for example of a battery.

Moreover, the vibration sensor S is an environment-friendly source of energy, since it does not contain any chemical which might pollute the environment.

Furthermore, the power consumption of the device WSD is advantageously minimized, since the device WSD is switched on only when needed, i.e. only when an event occurs (i.e. occurrence of the mechanical vibration V) which shall be reported to the remote device. Otherwise, the device WSD is switched off, and accordingly does not consume any electric power. Besides, the power consumption of the remote device is also advantageously minimized, since the device WSD triggers its switching on or its switching from a sleep mode to a waking mode only when needed, as it will be discussed in further detail herein after.

The device WSD is also advantageously efficient, since the sensing function and the power supplying function are integrated in the same component, namely the vibration sensor S, which detects the mechanical vibration V and, at the same time, converts it into electric power supplying the transceiver TRX.

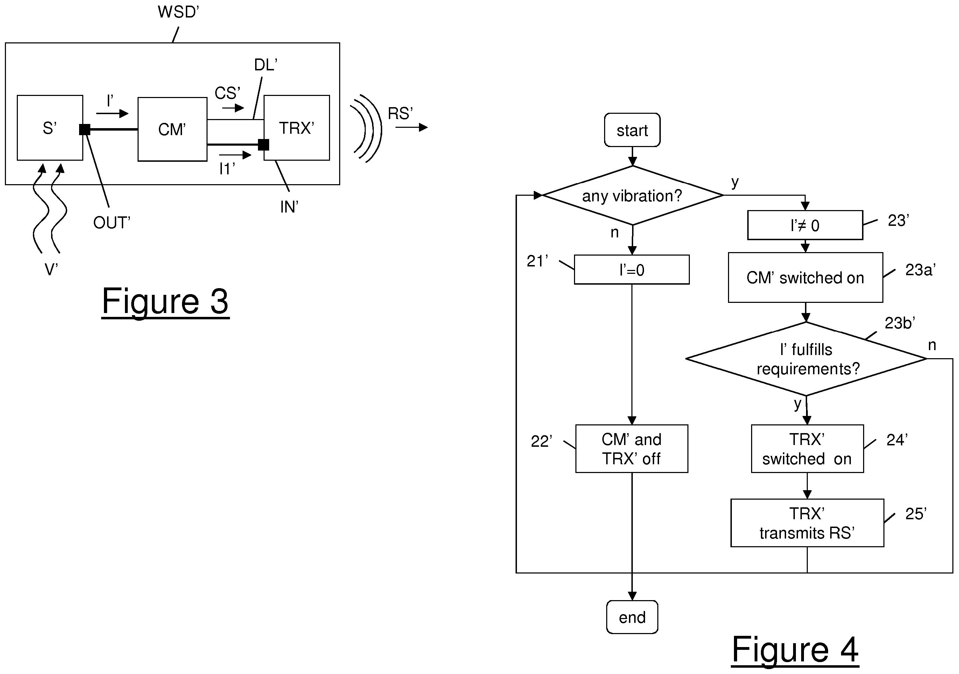

Figure 3 shows a wireless sensing device WSD' according to a second embodiment of the present invention.

Similarly to the wireless sensing device WSD of Figure 1, the wireless sensing device WSD' preferably comprises one or more vibration sensors and one or more wireless transceivers. By way of non limiting example, also the device WSD' of Figure 3 comprises one vibration sensor S' and one short-range wireless transceiver TRX'.

The vibration sensor S' and the short-range wireless transceiver TRX' are substantially similar to the vibration sensor S and the short-range wireless transceiver TRX of Figure 1. Hence, a detailed description will not be repeated. It is only mentioned that the vibration sensor S' is configured to convert a mechanical vibration V' into an electric signal I' and emit it through its output OUT'. In particular, the vibration sensor S' preferably comprises a vibration energy harvester based on a one-degree-of-freedom or a multi-degree-of-freedom vibration energy harvester, more preferably the vibration energy harvester described by US 2011/0074162. On the other hand, the transceiver TRX' comprises an input IN' through which it may be supplied - under certain conditions - by a portion of the electric signal I' emitted by the vibration sensor S', as it will be discussed in detail herein after.

In addition to the vibration sensor S' and the transceiver TRX', the device WSD' also comprises a control module CM'. The control module CM' is preferably interposed between the vibration sensor S' and the transceiver TRX', namely it has an input connected to the output OUT' of the vibration sensor S' and an output connected to the input IN' of the transceiver TRX'. The control module CM' and the transceiver TRX' are also reciprocally connected by a data link DL'.

The control module CM' may comprise one or more hardware components, one or more software components as well hardware components capable of executing software in association with an appropriate software component. The control module CM' may comprise one or more dedicated processors. Moreover, the control module CM' may comprise, without limitation, a digital signal processor (DSP) hardware, a network processor, an application specific integrated circuit (ASIC), a field programmable gate array (FPGA), a read-only memory (ROM) for storing software, a random access memory (RAM) and a non volatile storage device.

The operation of the device WSD' will be now described in detail, with reference to the flow chart of Figure 4.

In absence of mechanical vibrations in the environment surrounding the device WSD', the vibration sensor S' is not subject to any mechanical vibration, and accordingly it does not generate any electric signal (step 21'). The control module CM' and the transceiver TRX' are therefore not supplied by any electric power and are consequently switched off (step 22').

When a mechanical vibration V' arises in the environment surrounding the device WSD', the vibration sensor S' converts such a mechanical vibration V' into an electric signal I' or, in other words, generates the electric signal I' in response to the mechanical vibration V' (step 23'). The vibration sensor S' then supplies the electric signal I' to the control module CM', which accordingly switches on (step 23a').

Then, the control module CM' preferably checks whether the electric signal I' fulfills one or more predetermined requirements (step 23b') for triggering switching on of the transceiver TRX' and transmission of a radio signal.

The predetermined requirement(s) depend on the type of application, as it will be discussed in detail herein after. For instance, the control module CM' may check whether the intensity of the electric signal I', which is indicative of the amplitude of the mechanical vibration V', overcomes a predetermined threshold. Alternatively, the control module CM' may check whether the frequency spectrum of the electric signal I', which is indicative of the frequency spectrum of the mechanical vibration V', fulfills certain shape requirements.

If the one or more predetermined requirements checked at step 23b' are fulfilled, the control module CM' preferably supplies a portion I1' of the electric signal I' (which is not used for supplying the control module CM') to the transceiver TRX'. If the intensity of the electric signal portion I1' is sufficient, the transceiver TRX' switches on (step 24'). Otherwise, the transceiver TRX' remains switched off until the intensity of the electric signal portion I1' becomes sufficient to power it (e.g. due to an increase of the vibration intensity).

When the transceiver TRX' switches on, the control module CM' preferably instructs it to transmit a radio signal RS' to the above mentioned remote device (step 25'). Preferably, step 25' comprises transmitting a suitable command signal CS' from the control module CM' to the transceiver TRX' via the data link DL'.

The radio signal RS' is indicative of the fact that the predetermined requirement(s) on the electric signal I' are fulfilled and is preferably suitable to trigger an appropriate reaction at the remote device. The content of the radio signal RS' and the consequent reaction of the remote device depend on the application of the wireless sensor device WSD', as it will be discussed in detail herein after.

For instance, the radio signal RS' may comprise an alarm message which, upon reception at the remote device, brings the remote device to an alert state, to a waking state or changes its functionality. Alternatively or in addition, the radio signal RS' may comprise information relating to the electric signal I' (e.g. frequency spectrum and/or amplitude). Such information relating to the electric signal portion I' may be provided by the control module CM' as a result of the processing performed at step 23b'. Further, such information may be stored in a memory included in the device WSD' until the control module CM' determines that the transceiver TRX' is switched on. Then, they are preferably included in the command signal CS' transmitted from the control module CM' to the transceiver TRX'.

If the one or more predetermined requirements checked at step 23b' are not fulfilled, the control module CM' preferably does not perform any other action. The transceiver TRX' is not supplied by any electric current and accordingly remains switched off.

Therefore, according to the second embodiment of the present invention, the vibration sensor S' acts as a local power source for the device WSD' itself, and in particular for the control module CM' and the transceiver TRX'. In absence of mechanical vibrations, the vibration sensor S' does not generate any electric power and the device WSD' is accordingly switched off. In the presence of mechanical vibrations, the vibration sensor S' converts such vibrations into an electric power supplying the control module CM'. In turn, the control module CM' checks whether the predetermined requirement(s) is/are met and, in the affirmative, supplies the transceiver TRX', thereby triggering its switching on and transmission of the radio signal RS'.

Hence, while according to the first embodiment the transceiver TRX is automatically powered upon detection of any vibration V (provided that the intensity of the electric signal I is sufficient to power it), according to the second embodiment the wireless sensing device WSD' has the capability of autonomously processing the information relating to the detected vibration V' and deciding whether to power the transceiver TRX' based on the results of such processing.

The device WSD' according to this second embodiment provides the same advantages as the device WSD: potentially unlimited amount of green electric power provided by the vibration sensor, minimization of power consumption of the device WSD' itself (control module and transceiver being switched on only when needed) and of the remote device, and device efficiency (sensing function and power supplying function being integrated in a same component).

The wireless sensing devices WSD and WSD' described above may be advantageously included in wireless sensor networks for various applications.

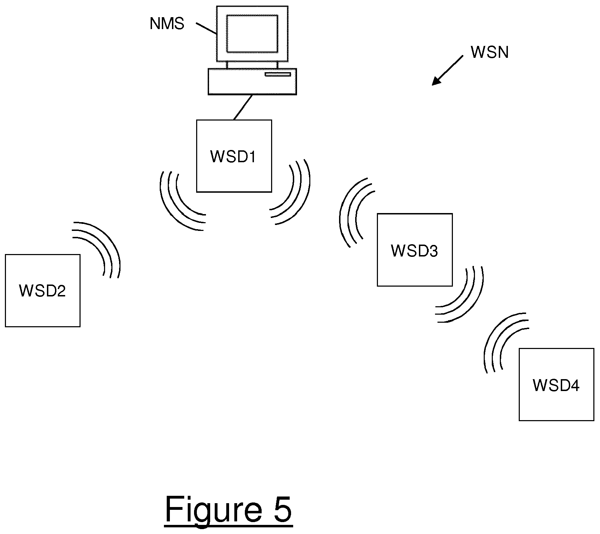

Figure 5 shows a wireless sensor network WSN comprising a number (four, by way of non-limiting example) wireless sensor devices WSD1, WSD2, WSD3, WSD4. The wireless sensor devices WSD1, WSD2, WSD3, WSD4 may be similar to the device WSD of Figure 1 or to the device WSD' of Figure 3, depending on the type of application. The devices WSD1, WSD2, WSD3, WSD4 are preferably reciprocally interconnected via wireless links according to a tree topology whose root is the device WD1. This is merely exemplary, since the devices WSD1, WSD2, WSD3, WSD4 may be connected according to any known network topology (star, mesh, bus, etc.).

The wireless sensor network WSN also comprises a network management system NMS connected (preferably via a wired link) to the device WSD1.

The device WSD1 preferably acts as a concentrator or gateway, which gathers the information from the other devices WSD2, WSD3, WDS4, optionally performs a processing of the gathered information and forwards them to the network management system NMS. The network management system NMS preferably receives the information from the device WSD1, processes them and performs consequent management actions, such as for instance sending alarms, etc.

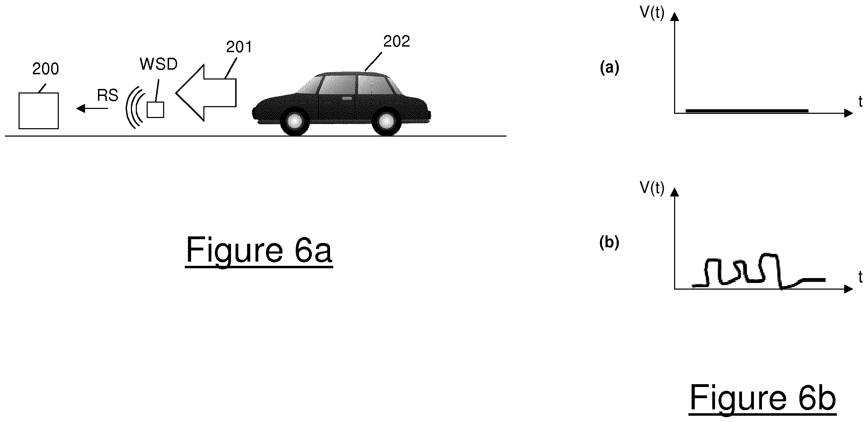

An exemplary application of the device WSD according to the first embodiment of the present invention will be now described with reference to Figures 6a and 6b.

Figure 6a shows a traffic monitoring device 200 located at a side of a road and configured to provide real-time traffic information (such as for instance road congestion or travel times) relating to that road. The traffic monitoring device 200 preferably comprises a wireless transceiver (such as a Bluetooth transceiver) configured to receive information from vehicles passing along the road to be monitored and a processing module configured to process such information.

A wireless vibration sensing device WSD according to the first embodiment of the present invention is preferably located on the road side in proximity of the traffic monitoring device 200. In particular, the device WSD is located before the traffic monitoring device 200 along the progress direction of vehicles (which is shown by the arrow 201 in Figure 6a). The device WSD may be included in a wireless sensing network configured to collect data relating to different points distributed along the same road or to different roads.

The device WSD is configured to detect the ground vibrations.

In particular, as shown in Figure 6b, when no vehicle passes along the road close to the device WSD, the electric signal I(t) provided by the vibration sensor S comprised in the device WSD is substantially null, as shown in the upper time diagram (a). The transceiver TRX of the device WSD is accordingly switched off.

When a car 202 passes along the road close to the device WSD, the electric signal I(t) provided by the vibration sensor S has a time-varying intensity related to the time-varying vibration amplitude, as shown in the lower time diagram (b). The electric signal I(i) is supplied to the transceiver TRX of the device WSD, which accordingly switches on and automatically transmits a radio signal RS to the traffic monitoring device 200.

When no vehicle passes along the road, the traffic monitoring device 200 is preferably in a sleep mode. In the sleep mode, only its wireless transceiver is active, whereas its processing module and possible other components are switched off. When the vehicle passes along the road, the traffic monitoring device 200 receives through its wireless transceiver the radio signal RS transmitted by the device WSD and, upon reception of such radio signal, switches from the sleep mode to a waking mode. In the waking mode, all the components (including the processing module) of the device 200 are switched on and process the information received from the vehicle 202.

Hence, the wireless vibration sensing device WSD advantageously allows keeping the traffic monitoring device 200 in sleep mode except when needed, i.e. when a car passes from which information shall be collected. This allows reducing power consumption of the device 200, especially in less frequented roads and at off-peak hours.

In addition or alternatively to the above function of switching the traffic monitoring device 200 from sleep mode to waking mode, the device WSD may also be used for estimating the number of passing vehicles, for switching a speed-camera from sleep mode to waking mode, and so on. Instead of the device WSD, a device WSD' according to the second embodiment may be provided, which may carry out more sophisticated functions such as determining the type of vehicle (car, bus, truck, etc.), determining whether the weight of a vehicle overcomes a given threshold, and so on.

A further wireless vibration sensing device similar to the device WSD or WSD' may also be placed on the vehicle 202. Upon detection of the vehicle vibrations, the transceiver of such device WSD switches on and may transmit to the traffic monitoring device 200 a radio signal RS comprising information relating to the vehicle (e.g. an identifier). If multiple devices 200 are distributed along the road, information relating to the vehicle collected by the various devices 200 allows providing detailed information on that vehicle, e.g. the average speed. In addition or alternatively, such device WSD may detect operating conditions of the vehicle (e.g. wheel balance/pressure).

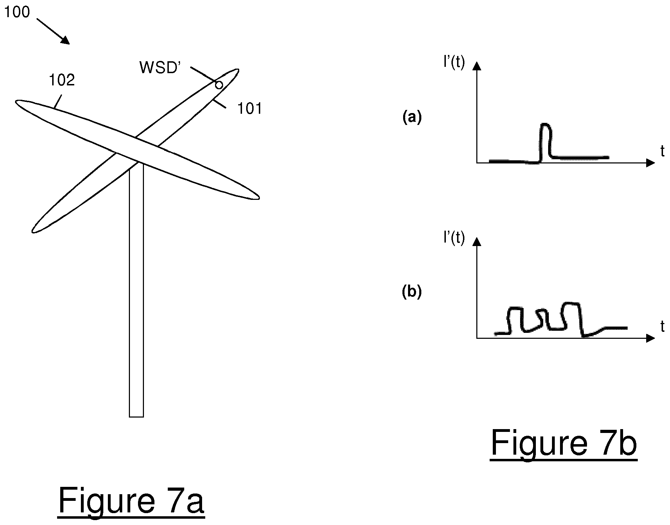

An exemplary application of the device WSD' according to the second embodiment of the present invention will be now described with reference to Figures 7a and 7b.

Figure 7a shows a wind turbine 100 comprising two turbine blades 101, 102. The wind turbine 100 further comprises a vibration wireless sensing device WSD' according to the second embodiment of the present invention. The device WSD' is preferably located at the end of one of the turbine blades 101. The device WSD' is configured to communicate via wireless with a remote control station (not shown in Figure 7a). The device WSD' may be included in a wireless sensing network configured to collect data relating to several wind turbines.

The device WSD' continuously detects the mechanical vibrations V' undergone by the turbine blade 101.

As shown in Figure 7b, when the turbine blade 101 properly operates, the electric signal I'(t) provided by the vibration sensor S' comprised in the device WSD' has known predefined shape, which is shown in the upper time diagram (a). If the blade 101 becomes damaged, the electric signal I'(t) provided by the vibration sensor S' is distorted relative to the known shape of the upper diagram (a), as shown in the lower time diagram (b).

The control module CM' included in the device WSD' preferably determines the presence of distortions relative to the known predefined shape of diagram (a) (step 23b' of the flow chart in Figure 4). In the absence of distortions, no electric power is supplied to the transceiver TRX' of the device WSD', which is accordingly switched off. As a distortion arises, the control module CM' of the device WSD' supplies the transceiver TRX', which accordingly switches on (step 24' of the flow chart in Figure 4) and transmits a radio signal RS' to the remote control station (step 25' of the flow chart in Figure 4). The remote control station is accordingly informed of the fact that the turbine blade 101 is damaged. Such information may be advantageously used to predict future failure of the turbine 100.

Use of the device WSD' in such exemplary application is particularly advantageous, because wind turbines are often located in remote rural areas, where the mains may not be available or not reliable. In case the electric power I' provided by the vibration sensor S' exceeds the power demand of the device WSD', the exceeding electric power may be advantageously merged with the electric power generated by the wind turbine 100.

The wireless sensing devices WSD and WSD' may be used for several other applications. For instance, they may be used for determining whether the intensity of vibrations to which workers are exposed is compliant with the relevant regulations.

Alternatively, the wireless sensing device WSD or WSD' may be used for protecting historical buildings, sport arenas, stadiums, etc. from damages due to vibrations. In such case, when vibrations arise or exceed a given threshold, the transceiver of the device WSD or WSD' transmits to a remote control station a radio signal triggering an emergency call.

Again, the device WSD may be advantageously used as door knocker. When someone knocks the door, the device WSD converts the door vibrations into electric power supplying its wireless transceiver, which switches on and automatically transmits an activation signal to a remote bell placed in the apartment.

In all such applications, the device WSD or WSD' provides the following advantages: potentially unlimited amount of green electric power provided by the vibration sensor, minimization of power consumption (control module and transceiver being switched on only when needed) and device efficiency (sensing function and power supplying function being integrated in a same component).

## Claims

1. A wireless sensing device (WSD, WSD') comprising:
- a vibration sensor (S, S') configured to detect a mechanical vibration (V, V') and to generate an electric signal (I, I') in response to said mechanical vibration (V, V'); and
- a transceiver (TRX, TRX') suitable for establishing a wireless connection between said wireless sensing device (WSD, WSD') and a remote device,
wherein said transceiver (TRX, TRX') is configured to be powered by at least a portion (I, I1') of said generated electric signal (I, I') and, depending on an intensity of said at least a portion (I, I1') of said generated electric signal (I, I'), to switch on and transmit a radio signal (RS) to said remote device,
and wherein said transceiver (TRX, TRX') is configured to remain switched off if said intensity of said at least a portion (I, I1') of said generated electric signal (I, I') is not sufficient to power said transceiver (TRX, TRX').

2. The wireless sensing device (WSD, WSD') according to claim 1, wherein said vibration sensor (S, S') comprises a vibration energy harvester.

3. The wireless sensing device (WSD, WSD') according to claim 2, wherein said vibration energy harvester comprises a housing, a first mass element and a second mass element arranged within said housing, and an energy transducer coupled to said second mass element, said energy transducer being arranged to be activated by a relative motion between said housing and said second mass element, said relative motion being excited by at least a portion of a kinetic energy collisionally transferred from said first mass element to said second mass element.

4. The wireless sensing device (WSD) according to any of the preceding claims, wherein said sensor (S) is configured to automatically supply said at least a portion (I) of said generated electric signal (I) to said transceiver (TRX).

5. The wireless sensing device (WSD) according to claim 4, wherein said transceiver (TRX) is further configured to, when switched on, automatically transmit said radio signal (RS) to said remote device.

6. The wireless sensing device (WSD') according to any of claims 1 to 3, wherein it further comprises a control module (CM') interposed between said vibration sensor (S') and said transceiver (TRX'), said control module (CM') being configured to check whether said electric signal (I') fulfills one or more predetermined requirements, and to supply said at least a portion (I1') of said generated electric signal (I') to said transceiver (TRX') if said one or more predetermined requirements are fulfilled.

7. The wireless sensing device (WSD') according to claim 6, wherein said control module (CM') is further configured to instruct said transceiver (TRX') to transmit said radio signal (RS') to said remote device.

8. The wireless sensing device (WSD') according to claim 7, wherein said transceiver (TRX') is further configured to include in said radio signal (RS') information relating to said electric signal (I').

9. The wireless sensing device (WSD, WSD') according to any one of the preceding claims, wherein said vibration sensor (S, S') is configured to act as a local power source for said device (WDS, WDS') by converting said mechanical vibration (V, V') into electric power.

10. A method for operating a wireless sensing device (WSD, WSD') comprising a vibration sensor (S, S') and a transceiver (TRX, TRX') suitable for establishing a wireless connection between said wireless sensing device (WSD, WSD') and a remote device, said method comprising:
a) at said vibration sensor (S, S'), detecting a mechanical vibration (V, V') and generating an electric signal (I, I') in response to said mechanical vibration (V, V'); and
b) at said transceiver (TRX, TRX'), being powered by at least a portion (I, I1') of said generated electric signal (I, I') and, depending on an intensity of said at least a portion (I, I1') of said generated electric signal (I, I'), switching on and transmitting a radio signal (RS) to said remote device, wherein said transceiver (TRX, TRX') remains switched off if said intensity of said at least a portion (I, I1') of said generated electric signal (I, I') is not sufficient to power said transceiver (TRX, TRX').

11. The method according to claim 10, wherein said step b) further comprises, before receiving said at least a portion (I1') of said generated electric signal (I') at said transceiver (TRX'), checking whether said generated electric signal (I') fulfills one or more predetermined requirements, and receiving said at least a portion (I1') of said generated electric signal (I') at said transceiver (TRX') if said one or more predetermined requirements are fulfilled.

12. The method according to claim 11, wherein said checking whether said generated electric signal (I') fulfills one or more predetermined requirements comprise any one of the following operations: checking whether an intensity of said generated electric signal (I') overcomes a predetermined threshold, checking whether a shape of said generated electric signal (I') differs from a predetermined shape, checking whether a frequency spectrum of said generated electric signal (I') fulfills a predetermined shape requirement.

13. The method according to claim 12, wherein it further comprises detecting an event on the basis of said generated electric signal (I') fulfilling said one or more predetermined requirements.

14. The method according to any one of claims 11 to 13, wherein said step b) further comprises instructing said transceiver (TRX') to transmit said radio signal (RS') to said remote device.

15. The method according to claim 14, wherein said step a) further comprises including in said radio signal (RS') information relating to said electric signal (I').

16. The method according to any one of claims 10 to 15, wherein said vibration sensor (S, S') acts as a local power source for said device (WDS, WDS') by converting said mechanical vibration (V, V') into electric power.

17. A wireless sensor network (WSN) comprising at least one wireless sensing device (WSD1, WSD2, WSD3, WSD4) according to any of claims 1 to 9.

## Patentansprüche

1. Drahtlose Erfassungsvorrichtung (WSD, WSD'), die Folgendes umfasst:
- einen Vibrationssensor (S, S'), der dazu ausgelegt ist, eine mechanische Vibration (V, V') zu detektieren und in Reaktion auf die mechanische Vibration (V, V') ein elektrisches Signal (I, I') zu erzeugen; und
- einen Sendeempfänger (TRX, TRX'), der geeignet ist, zwischen der drahtlosen Erfassungsvorrichtung (WSD, WSD') und einer entfernten Vorrichtung eine drahtlose Verbindung aufzubauen,
wobei der Sendeempfänger (TRX, TRX') dazu ausgelegt ist, von mindestens einem Abschnitt (I, I1') des erzeugten elektrischen Signals (I, I') mit Strom versorgt zu werden und in Abhängigkeit von einer Stärke des mindestens einen Abschnitts (I, I1') des erzeugten elektrischen Signals (I, I') ein Funksignal (RS) einzuschalten und zur entfernten Vorrichtung zu übertragen,
und wobei der Sendeempfänger (TRX, TRX') dazu ausgelegt ist, ausgeschaltet zu bleiben, wenn die Stärke des mindestens einen Abschnitts (I, I1') des erzeugten elektrischen Signals (I, I') nicht ausreichend ist, um den Sendeempfänger (TRX, TRX') mit Strom zu versorgen.

2. Drahtlose Erfassungsvorrichtung (WSD, WSD') nach Anspruch 1, wobei der Vibrationssensor (S, S') eine Vibrationsenergieerntemaschine umfasst.

3. Drahtlose Erfassungsvorrichtung (WSD, WSD') nach Anspruch 2, wobei die Vibrationsenergieerntemaschine ein Gehäuse, ein erstes Masseelement und ein zweites Masseelement, die im Gehäuse angeordnet sind, und einen Energiewandler, der an das zweite Masseelement gekoppelt ist, umfasst, wobei der Energiewandler angeordnet ist, durch eine relative Bewegung zwischen dem Gehäuse und dem zweiten Masseelement aktiviert zu werden, wobei die relative Bewegung durch mindestens einen Abschnitt einer kinetischen Energie erregt wird, die kollisionsbedingt vom ersten Masseelement auf das zweite Masseelement transferiert wird.

4. Drahtlose Erfassungsvorrichtung (WSD) nach einem der vorhergehenden Ansprüche, wobei der Sensor (S) dazu ausgelegt ist, den mindestens einen Abschnitt (I) des erzeugten elektrischen Signals (I) dem Sendeempfänger (TRX) automatisch zuzuführen.

5. Drahtlose Erfassungsvorrichtung (WSD) nach Anspruch 4, wobei der Sendeempfänger (TRX) ferner dazu ausgelegt ist, wenn er eingeschaltet ist, das Funksignal (RS) automatisch zur entfernten Vorrichtung zu übertragen.

6. Drahtlose Erfassungsvorrichtung (WSD') nach einem der Ansprüche 1 bis 3, wobei sie ferner ein Steuermodul (CM') umfasst, das zwischen dem Vibrationssensor (S') und dem Sendeempfänger (TRX') eingefügt ist, wobei das Steuermodul (CM') dazu ausgelegt ist zu prüfen, ob das elektrische Signal (I') eine oder mehrere vorbestimmte Anforderungen erfüllt, und den mindestens einen Abschnitt (I1') des erzeugten elektrischen Signals (I') dem Sendeempfänger (TRX') zuzuführen, wenn die eine oder die mehreren vorbestimmten Anforderungen erfüllt sind.

7. Drahtlose Erfassungsvorrichtung (WSD') nach Anspruch 6, wobei das Steuermodul (CM') ferner dazu ausgelegt ist, den Sendeempfänger (TRX') anzuweisen, das Funksignal (RS') zur entfernten Vorrichtung zu übertragen.

8. Drahtlose Erfassungsvorrichtung (WSD') nach Anspruch 7, wobei der Sendeempfänger (TRX') ferner dazu ausgelegt ist, Informationen, die das elektrische Signal (I') betreffen, in das Funksignal (RS') einzubinden.

9. Drahtlose Erfassungsvorrichtung (WSD, WSD') nach einem der vorhergehenden Ansprüche, wobei der Vibrationssensor (S, S') dazu ausgelegt ist, durch Umwandeln der mechanischen Vibration (V, V') in elektrischen Strom als eine lokale Stromquelle für die Vorrichtung (WDS, WDS') zu fungieren.

10. Verfahren zum Betreiben einer drahtlosen Erfassungsvorrichtung (WSD, WSD'), die einen Vibrationssensor (S, S') und einen Sendeempfänger (TRX, TRX'), der geeignet ist, zwischen der drahtlosen Erfassungsvorrichtung (WSD, WSD') und einer entfernten Vorrichtung eine drahtlose Verbindung aufzubauen, umfasst, wobei das Verfahren Folgendes umfasst:
a) am Vibrationssensor (S, S') Detektieren einer mechanischen Vibration (V, V') und Erzeugen eines elektrischen Signals (I, I') in Reaktion auf die mechanische Vibration (V, V'); und
b) am Sendeempfänger (TRX, TRX'), der von mindestens einem Abschnitt (I, I1') des erzeugten elektrischen Signals (I, I') mit Strom versorgt wird, und in Abhängigkeit von einer Stärke des mindestens einen Abschnitts (I, I1') des erzeugten elektrischen Signals (I, I') Einschalten und Übertragen eines Funksignals (RS) zur entfernten Vorrichtung, wobei der Sendeempfänger (TRX, TRX') ausgeschaltet bleibt, wenn die Stärke des mindestens einen Abschnitts (I, I1') des erzeugten elektrischen Signals (I, I') nicht ausreichend ist, um den Sendeempfänger (TRX, TRX') mit Strom zu versorgen.

11. Verfahren nach Anspruch 10, wobei der Schritt b) vor dem Empfangen des mindestens einen Abschnitts (I1') des erzeugten elektrischen Signals (I') am Sendeempfänger (TRX') das Prüfen, ob das erzeugte elektrische Signal (I') eine oder mehrere vorbestimmte Anforderungen erfüllt, und das Empfangen des mindestens einen Abschnitts (I1') des erzeugten elektrischen Signals (I') am Sendeempfänger (TRX'), wenn die eine oder die mehreren vorbestimmten Anforderungen erfüllt sind, umfasst.

12. Verfahren nach Anspruch 11, wobei das Prüfen, ob das erzeugte elektrische Signal (I') eine oder mehrere vorbestimmte Anforderungen erfüllt, eine der folgenden Operationen umfasst: Prüfen, ob eine Stärke des erzeugten elektrischen Signals (I') einen vorbestimmten Schwellwert übersteigt, Prüfen, ob sich eine Form des erzeugten elektrischen Signals (I') von einer vorbestimmten Form unterscheidet, Prüfen, ob ein Frequenzspektrum des erzeugten elektrischen Signals (I') eine vorbestimmte Formanforderung erfüllt.

13. Verfahren nach Anspruch 12, wobei es darauf basierend, dass das erzeugte elektrische Signal (I') die eine oder die mehreren vorbestimmten Anforderungen erfüllt, ferner das Detektieren eines Ereignisses umfasst.

14. Verfahren nach einem der Ansprüche 11 bis 13, wobei der Schritt b) ferner das Anweisen des Sendeempfängers (TRX'), das Funksignal (RS') zur entfernten Vorrichtung zu übertragen, umfasst.

15. Verfahren nach Anspruch 14, wobei der Schritt a) ferner das Einbinden von Informationen, die das elektrische Signal (I') betreffen, in das Funksignal (RS') umfasst.

16. Verfahren nach einem der Ansprüche 10 bis 15, wobei der Vibrationssensor (S, S') durch Umwandeln der mechanischen Vibration (V, V') in elektrischen Strom als eine lokale Stromquelle für die Vorrichtung (WDS, WDS') fungiert.

17. Drahtloses Sensornetzwerk (WSN), das mindestens eine drahtlose Erfassungsvorrichtung(WSD1, WSD2, WSD3, WSD4) nach einem der Ansprüche 1 bis 9 umfasst.

## Revendications

1. Dispositif de détection sans fil (WSD, WSD') comprenant :
- un capteur (S, S') de vibrations configuré pour détecter une vibration mécanique (V, V') et pour générer un signal électrique (I, I') en réponse à ladite vibration mécanique (V, V') ; et
- un émetteur-récepteur (TRX, TRX') adapté pour établir une connexion sans fil entre ledit dispositif de détection sans fil (WSD, WSD') et un dispositif à distance,
dans lequel ledit émetteur-récepteur (TRX, TRX') est configuré pour être alimenté par au moins une partie (I, I1') dudit signal électrique (I, I') généré et, en fonction d'une intensité de ladite au moins une partie (I, I1') dudit signal électrique (I, I') généré, pour mettre en marche et transmettre un signal radio (RS) audit dispositif à distance,
et dans lequel ledit émetteur-récepteur (TRX, TRX') est configuré pour rester éteint si ladite intensité de ladite au moins une partie (I, I1') dudit signal électrique (I, I') généré n'est pas suffisante pour alimenter ledit émetteur-récepteur (TRX, TRX').

2. Dispositif de détection sans fil (WSD, WSD') selon la revendication 1, dans lequel ledit capteur (S, S') de vibrations comprend un collecteur d'énergie vibratoire.

3. Dispositif de détection sans fil (WSD, WSD') selon la revendication 2, dans lequel ledit collecteur d'énergie vibratoire comprend un boîtier, un premier élément de masse et un deuxième élément de masse agencé à l'intérieur dudit boîtier, et un transducteur d'énergie couplé audit deuxième élément de masse, ledit transducteur d'énergie étant agencé pour être activé par un mouvement relatif entre ledit boîtier et ledit deuxième élément de masse, ledit mouvement relatif étant excité par au moins une partie d'une énergie cinétique transférée par collision, dudit premier élément de masse audit deuxième élément de masse.

4. Dispositif de détection sans fil (WSD) selon l'une des revendications précédentes, dans lequel ledit capteur (S) est configuré pour fournir automatiquement ladite au moins une partie (I) dudit signal électrique (I) généré audit émetteur-récepteur (TRX).

5. Dispositif de détection sans fil (WSD) selon la revendication 4, dans lequel ledit émetteur-récepteur (TRX) est en outre configuré pour, lorsqu'il est mis en marche, transmettre automatiquement ledit signal radio (RS) audit dispositif à distance.

6. Dispositif de détection sans fil (WSD') selon l'une quelconque des revendications 1 à 3, dans lequel il comprend en outre un module de commande (CM') interposé entre ledit capteur de vibrations (S') et ledit émetteur-récepteur (TRX'), ledit module de commande (CM') étant configuré pour vérifier si ledit signal électrique (I') remplit une ou plusieurs exigences prédéterminées, et pour fournir ladite au moins une partie (I1') dudit signal électrique (I') généré audit émetteur-récepteur (TRX') si lesdites une ou plusieurs exigences prédéterminées sont remplies.

7. Dispositif de détection sans fil (WSD') selon la revendication 6, dans lequel ledit module de commande (CM') est en outre configuré pour ordonner audit émetteur-récepteur (TRX') de transmettre ledit signal radio (RS') audit dispositif à distance.

8. Dispositif de détection sans fil (WSD') selon la revendication 7, dans lequel ledit émetteur-récepteur (TRX') est en outre configuré pour inclure dans ledit signal radio (RS') des informations relatives audit signal électrique (I').

9. Dispositif de détection sans fil (WSD, WSD') selon l'une quelconque des revendications précédentes, dans lequel ledit capteur (S, S') de vibrations est configuré pour agir comme une source de puissance locale pour ledit dispositif (WDS, WDS') en convertissant ladite vibration mécanique (V, V') en puissance électrique.

10. Procédé pour faire fonctionner un dispositif de détection sans fil (WSD, WSD') comprenant un capteur (S, S') de vibrations et un émetteur-récepteur (TRX, TRX') adapté pour établir une connexion sans fil entre ledit dispositif de détection sans fil (WSD, WSD') et un dispositif à distance, ledit procédé comprenant :
a) au niveau dudit capteur (S, S') de vibrations, la détection d'une vibration mécanique (V, V') et la génération d'un signal électrique (I, I') en réponse à ladite vibration mécanique (V, V') ; et
b) au niveau dudit émetteur-récepteur (TRX, TRX') qui est alimenté par au moins une partie (I, I1') dudit signal électrique (I, I') généré, et en fonction d'une intensité de ladite au moins une partie (I, I1') dudit signal électrique (I, I') généré, la mise en marche et la transmission d'un signal radio (RS) audit dispositif à distance, dans lequel ledit émetteur-récepteur (TRX, TRX') reste éteint si ladite intensité de ladite au moins une partie (I, I1') dudit signal électrique (I, I') généré n'est pas suffisante pour alimenter ledit émetteur-récepteur (TRX, TRX').

11. Procédé selon la revendication 10, dans lequel ladite étape b) comprend en outre, avant de recevoir ladite au moins une partie (I1') dudit signal électrique (I') généré au niveau dudit émetteur-récepteur (TRX'), la vérification permettant de savoir si ledit signal électrique (I') généré remplit une ou plusieurs exigences prédéterminées, et la réception de ladite au moins une partie (I1') dudit signal électrique (I') généré au niveau dudit émetteur-récepteur (TRX') si lesdites une ou plusieurs exigences prédéterminées sont remplies.

12. Procédé selon la revendication 11, dans lequel ladite vérification permettant de savoir si ledit signal électrique (I') généré remplit une ou plusieurs exigences prédéterminées comprend l'une quelconque des opérations suivantes : vérifier si une intensité dudit signal électrique (I') généré dépasse un seuil prédéterminé, vérifier si une forme dudit signal électrique (I') généré diffère d'une forme prédéterminée, vérifier si un spectre de fréquences dudit signal électrique (I') généré remplit une exigence de forme prédéterminée.

13. Procédé selon la revendication 12, dans lequel il comprend en outre la détection d'un événement sur la base dudit signal électrique (I') généré remplissant lesdites une ou plusieurs exigences prédéterminées.

14. Procédé selon l'une quelconque des revendications 11 à 13, dans lequel ladite étape b) comprend en outre l'instruction pour l'émetteur-récepteur (TRX') de transmettre ledit signal ledit (RS') audit dispositif à distance.

15. Procédé selon la revendication 14, dans lequel ladite étape a) comprend en outre l'inclusion, dans ledit signal radio (RS'), d'informations relatives audit signal électrique (I').

16. Procédé selon l'une quelconque des revendications 10 à 15, dans lequel ledit capteur (S, S') de vibrations agit comme une source de puissance locale pour ledit dispositif (WDS, WDS') en convertissant ladite vibration mécanique (V, V') en puissance électrique.

17. Réseau de capteurs sans fil (WSN) comprenant au moins un dispositif de détection sans fil (WSD1, WSD2, WSD3, WSD4) selon l'une quelconque des revendications 1 à 9.
